(19) Europäisches Patentamt
European Patent Office
Office européen des brevets

(11) EP 0 629 650 B1

(12) EUROPÄISCHE PATENTSCHRIFT

(45) Veröffentlichungstag und Bekanntmachung des Hinweises auf die Patenterteilung:
**27.08.1997 Patentblatt 1997/35**

(51) Int Cl.6: **C08J 3/16**, C08L 101/00
// (C08L101/00, 33:14, 33:24)

(21) Anmeldenummer: **94109138.1**

(22) Anmeldetag: **15.06.1994**

(54) **Verwendung von Polymerisaten als Sprühhilfsmittel bei der Sprühtrocknung von wässrigen Polymerisatdispersionen**

Use of polymeric spray agents in the spray-drying of aqueous polymer dispersions

Utilisation d'agents polymères de pulvérisation dans le séchage par pulvérisation de dispersions aqueuses de polymères

(84) Benannte Vertragsstaaten:
**AT BE CH DE DK ES FR GB IT LI NL SE**

(30) Priorität: **18.06.1993 DE 4320220**

(43) Veröffentlichungstag der Anmeldung:
**21.12.1994 Patentblatt 1994/51**

(73) Patentinhaber: **BASF Aktiengesellschaft**
**67063 Ludwigshafen (DE)**

(72) Erfinder:
- **Penzel, Erich, Dr.**
  **D-67063 Ludwigshafen (DE)**
- **Franzmann, Gernot, Dr.**
  **D-67273 Bobenheim (DE)**
- **Angel, Maximilian, Dr.**
  **D-67105 Schifferstadt (DE)**
- **Pakusch, Joachim, Dr.**
  **D-67065 Ludwigshafen (DE)**
- **Schuler, Bernhard, Dr.**
  **D-68199 Mannheim (DE)**

(56) Entgegenhaltungen:
**EP-A- 0 003 235** **EP-A- 0 104 378**
**DE-A- 4 139 602**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft die Verwendung von Polymerisaten I, die, in polymerisierter Form, zu

15 bis 80 Gew.-% aus wenigstens einem Monomeren der allgemeinen Formel I und/oder deren Salzen (Monomere a)

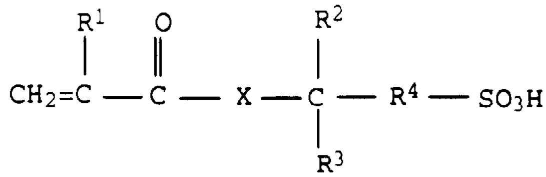

(I),

mit

$R^1$, $R^2$, $R^3$: unabhängig voneinander H oder $C_1$- bis $C_3$-Alkyl,

$R^4$: $C_1$- bis $C_5$-Alkylen und

X: O oder NH,

und

zu 20 bis 85 Gew.-% aus wenigstens einem radikalisch copolymerisierbaren Monomeren (Monomere b)

mit der Maßgabe aufgebaut sind, daß die mittlere molare Löslichkeit der Bestandteile des Gemisches der insgesamt einpolymerisierten Monomeren b ($L^b$) bei 25°C in Wasser geringer ist, als die entsprechend definierte molare Löslichkeit der Bestandteile des Gemisches der insgesamt einpolymerisierten Monomeren a ($L^a$), als Hilfsmittel bei der Sprühtrocknung wäßriger Dispersionen von von den Polymerisaten I verschiedenen Polymerisaten II. Vorzugsweise unterscheiden sich $L^a$ und $L^b$ wenigstens um den Faktor 1,2.

Unter der mittleren molaren Löslichkeit der Bestandteile des Gemisches wird dabei die Summe verstanden, die sich ergibt, wenn man die molaren Löslichkeiten jedes einzelnen Bestandteils des Gemisches, multipliziert mit dem molaren Bruchteil seiner Häufigkeit im Gemisch (Molenbruch), aufaddiert.

Außerdem betrifft die vorliegende Erfindung die im Rahmen der Sprühtrocknung anfallenden, in Wasser redispergierbaren, Polymerisatpulver, deren Verwendung als Additiv in mineralischen Bindemitteln oder als Bindemittel von Kunstharz-Putzen sowie die Herstellung von Polymerisaten I und die Sprühtrocknung von Dispersionen von Polymerisaten II.

Mineralische Bindemittel sind pulverförmige anorganische Stoffe wie Kalk, Zement oder Gips, die durch Anrühren mit Wasser in ihre gebrauchsfertige Form überführt werden, wobei letztere beim sich selbst überlassen, an der Luft oder auch unter Wasser, als Funktion der Zeit steinartig verfestigen. Üblicherweise werden sie zur Herstellung von mineralischen Baustoffen wie Mörteln oder Betonen eingesetzt, in dem man beim Anmachen mit Wasser feinteilige oder gröbere Zuschläge wie Sand oder Steine zusetzt.

Die Verwendung verschiedenster feinteiliger Polymerisate (der Begriff Polymerisat soll hier solche hochmolekularen Verbindungen umfassen, die durch radikalische Polymerisation ungesättigter Ausgangsmonomere erhältlich sind) als modifizierendes Additiv in mineralischen Bindemitteln ist allgemein bekannt (z.B. US-A 4 340 510, GB-PS 1 505 558, US-A 3 196 122, US-A 3 043 790 oder US-A 3 239 479).

Üblicherweise erfolgt das Einbringen dieser feinteiligen modifizierten Polymerisate in Gestalt ihrer wäßrigen Polymerisatdispersionen. Die Vorzüge dieser Verfahrensweise liegen unter anderem darin begründet, daß die wäßrige Polymerisatdispersion einerseits die Polymerisate in besonders feinteiliger, bindende Wirkung implizierender, Form enthält und andererseits als Dispergiermedium das zum Anmachen sowieso benötigte Wasser aufweist. Teilweise sind die wäßrigen Polymerisatdispersionen aufgrund dieser Eigenschaften sogar ganz an die Stelle der mineralischen Bindemittel getreten, z.B. auf dem Gebiet der Kunstharz-Putze.

Nachteilig an der Applikationsform "wäßrige Polymerisatdispersion" ist jedoch, daß sie als Verkaufsform nicht voll zu befriedigen vermag. So impliziert ihr Transport zum Gebrauchsort neben dem Transport des modifizierenden Polymerisats stets den Transport des überall leicht verfügbaren (Anmach)wassers und andererseits kann sie der mineralischen Bindemasse erst am Gebrauchsort zugesetzt werden, da diese ansonsten vor Gebrauch aushärtet.

Die unter den vorgenannten Gesichtspunkten zweckmäßigste Applikationsform des modifizierend wirkenden Polymerisatzusatzes ist daher diejenige des im wäßrigen Medium redispergierbaren Polymerisatpulvers (vgl. z.B. DE-A 42 06 429). Gemeinsam mit den übrigen Mörtel-, Beton- oder Putzbestandteilen lassen sich daraus verkaufsgerechte, lagerfähige Trockenzubereitungen anfertigen, die zur Überführung in die gebrauchsfertige Form lediglich mit Wasser angerührt werden müssen.

Eine besonders zweckmäßige Methode zur Überführung einer wäßrigen Polymerisatdispersion in ein redispergierbares Polymerisatpulver bildet das Verfahren der Sprühtrocknung, bei dem die Polymerisatdispersion in einem Warmluftstrom versprüht und entwässert wird. Vorzugsweise werden die Trockenluft und die versprühte Dispersion im Gleichstrom durch den Trockner geführt (vgl. z.B. EP-A 262 326 oder EP-A 407 889).

In wäßrigem Medium befriedigend redispergierbare Polymerisatpulver werden nach der Methode der Sprühtrocknung in der Regel jedoch nur dann erhalten, wenn die Ausgangstemperatur $T_A$ der Trockenluft unterhalb der Mindestfilmbildetemperatur MFT der wäßrigen Polymerisatdispersion liegt, wobei letztere normalerweise nur wenige Grad von der statischen Glasübergangstemperatur $T_g$ (midpoint temperature gemäß ASTM D 3418-82) des dispergierten Polymerisats verschieden ist (vgl. EP-A 262 326 und Ullmanns Encyklopädie der technischen Chemie, Bd. 19, 4. Auflage, Verlag Chemie, Weinheim (1980), S. 17, 18). Unter Glasübergangstemperatur wird in dieser Schrift stets $T_g$ verstanden, wenn nicht ausdrücklich etwas anderes erwähnt wird.

Da die zur Modifikation von mineralischen Bindemitteln oder als Bindemittel für Kunstharz-Putze einzusetzenden Polymerisate in der Regel eine Glasübergangstemperatur unterhalb von 60°C aufweisen (vgl. z.B. US-A 4 340 510), läßt sich ohne Mitverwendung von Sprühhilfsmitteln das Verfahren der Sprühtrocknung zur Herstellung ihrer redispergierbaren Polymerisatpulver entweder gar nicht oder lediglich in einem unwirtschaftlichen Temperaturbereich anwenden (mit zunehmender Differenz zwischen Eingangs- und Ausgangstemperatur der Trocknungsluft kann die Sprühtrocknung zunehmend wirtschaftlicher betrieben werden, wobei Ausgangstemperaturen von 30 bis 90°C, vorzugsweise 50 bis 70°C, besonders zweckmäßig sind). Unter Sprühhilfsmitteln versteht man dabei in der Regel solche Substanzen, deren Anwesenheit in der wäßrigen sprühzutrocknenden Polymerisatdispersion es gestattet, die Sprühtrocknung, im wesentlichen ohne Verlust der Redispergierbarkeit in wäßrigem Medium und im wesentlichen ohne Wandbelagbildung, mit einer Ausgangstemperatur $T_A$ der Trockenluft zu führen, die oberhalb der MFT der kein Sprühhilfsmittel aufweisenden wäßrigen Polymerisatdispersion liegt.

Aus der EP-A 78 449 und der EP-A 407 889 ist bekannt, Naphthalinsulfonsäure/Formaldehyd-Kondensate bzw. Phenolsulfonsäure/Formaldehyd-Kondensate als Sprühhilfsmittel einzusetzen. Nachteilig an diesen Sprühhilfsmitteln ist jedoch, daß sie gefärbt sind. Dementsprechend werden bei der Sprühtrocknung gefärbte Polymerisatpulver erhalten, was z.B. bei einer Verwendung derselben in Weißputzen oder mineralischen Fliesenklebern von Nachteil ist.

Die DE-A 41 18 007 empfiehlt Kondensate aus sulfonierten Phenolen, Harnstoff, weiteren organischen Stickstoffbasen und Formaldehyd als Sprühhilfsmittel. Die demgemäß gebildeten Polymerisatpulver sind zwar unmittelbar nach der Sprühtrocknung schneeartig weiß und in wäßrigem Medium in befriedigender Weise redispergierbar, sie neigen jedoch in stark alkalischem Milieu, wie es mineralischen Bindemitteln in der Regel eigen ist, und in Gegenwart von Metallionen zum Nachfärben. Außerdem mindert längeres Lagern in diesem Fall die Redispergierbarkeit, da die Pulverpartikel unter dem Eigengewicht des Pulvers dazu neigen, miteinander zu verkleben (verblocken).

Die EP-A 467 103 offenbart als Sprühhilfsmittel ganz oder teilweise neutralisierte wasserlösliche Copolymerisate, die neben hydrophoben Monomeren 50 bis 80 mol.-% an Carboxylgruppen aufweisenden Monomeren einpolymerisiert enthalten. Die mittels dieser Sprühhilfsmittel erhältlichen Polymerisatpulver sind zwar schneeartig weiß und im wäßrigen Medium in befriedigender Weise redispergierbar, nachteilig ist jedoch, daß sich auf der Grundlage solcher Polymerisatpulver keine Kunstharz-Putze formulieren lassen, deren Wasserfestigkeit im vollen Umfang zu befriedigen vermag.

Diese Problematik der Wasserfestigkeit ist von genereller Natur und vermutlich darauf zurückzuführen, daß ein Sprühhilfsmittel zur Gewährleistung befriedigender Redispergierbarkeit in wäßrigem Medium einen gewissen hydrophilen Charakter aufweisen muß, der zum Erfordernis einer befriedigenden Wasserfestigkeit des entsprechenden Kunstharz-Putzes in einem nahezu unauflösbaren Widerspruch steht und dazu führt, daß die Wasserfestigkeit des auf der Basis der Sprühhilfsmittel-freien wäßrigen Polymerisatdispersion gebildeten Putzes, im Vergleich zur Wasserfestigkeit des auf der Basis des redispergierten sprühgetrockneten, Sprühhilfsmittel enthaltenden, Polymerisatpulvers gebildeten Putzes, üblicherweise erhöht ist.

Dies gilt auch für die Sprühhilfsmittel auf der Basis Vinylpyrrolidon/Vinylacetat der EP-A 78 449 oder Polyvinylalkohol der DE-A 22 14 410.

Ein weiterer Nachteil der Sprühhilfsmittel des Standes der Technik liegt darin begründet, daß sie sich bezüglich der Verfestigungsdauer der modifizierten Mörtel oder Betone nicht neutral verhalten, sondern die Verfestigung in der Regel stark verzögern.

Die Aufgabe der vorliegenden Erfindung bestand daher darin, Sprühhilfsmittel zur Herstellung von in wäßrigem Medium redispergierbaren Polymerisatpulvern zur Verfügung zu stellen, die die Nachteile der dem Stand der Technik angehörigen Sprühhilfsmittel nicht aufweisen und insbesondere zur Herstellung von sprühgetrockneten Polymerisatpulvern verwendbar sind, die sich zur Herstellung von Kunstharz-Putzen mit erhöhter Wasserfestigkeit eignen.

Demgemäß wurde die Verwendung der eingangs definierten Polymerisate I als Sprühhilfsmittel gefunden. Ihre Verwendung zum Stabilisieren wäßriger Polymerisatdispersionen war aus der US-A 3 965 032 vorbekannt.

Bevorzugt enthalten die Polymerisate I solche Monomeren a einpolymerisiert, in denen $R^1$, $R^2$, $R^3$ unabhängig voneinander H oder $CH_3$ ist. Ferner sind Monomere a von Vorteil, in denen X NH ist. Als $R^4$ ist $C_1$- bis $C_3$-Alkylen vorteilhaft. Ganz besonders bevorzugt wird als Monomeres a 2-Acrylamido-2-methylpropansulfonsäure (bzw. deren Salze) eingesetzt, d.h. das Monomere der allgemeinen Formel I, in dem $R^1$ = H, $R^2$ und $R^3$ = $CH_3$, $R^4$ = $-CH_2-$ und X = NH ist. Geeignete Monomere a in Salzform sind insbesondere Alkalimetall- und Erdalkalimetallsalze, aber auch Salze die durch Neutralisation der freien Säure mittels organischen Aminen oder Ammoniak erhältlich sind. Im erfindungsgemäßen Sinn besonders günstige Polymerisate I sind solche, deren Gewichtsanteil an einpolymerisierten Monomeren a 20 bis 60 und besonders bevorzugt 25 bis 40 Gew.-% beträgt.

Als Monomere b kommen alle von den Monomeren a verschiedenen radikalisch polymerisierbaren Monomeren in Betracht. Dies sind insbesondere monoethylenisch ungesättigte Monomere wie Olefine, z.B. Ethylen oder Propylen, vinlyaromatische Monomere wie Styrol, $\alpha$-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie insbesondere Acrylsäure- und Methacrylsäuremethyl-, -ethyl, -n-butyl, -iso-butyl, -tert.-butyl und -2-ethylhexylester, Maleinsäuredimethylester oder Maleinsäure-n-butylester, die Nitrile der vorgenannten $\alpha,\beta$-monoethylenisch ungesättigten Carbonsäuren wie Acrylnitril sowie $C_{4-8}$-konjugierte Diene wie 1,3-Butadien und Isopren. Die genannten Monomeren b bilden in der Regel die Hauptmonomeren b, die, bezogen auf die Gesamtmenge der Monomeren b, normalerweise einen Anteil von mehr als 50 Gew.-% auf sich vereinen. Monomere b, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der Monomeren b, von weniger als 50 Gew.-%, in der Regel 0 bis 20 und vorzugsweise 0 bis 10 Gew.-%, mit einpolymerisiert.

Beispiele für derartige Monomere b sind 3 bis 6 C-Atome aufweisende $\alpha,\beta$-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, die Monoester dieser Carbonsäuren mit mehrwertigen Alkoholen wie Hydroxyethylacrylat, Hydroxypropylacrylat, ferner Vinylsulfonsäure sowie N-Vinylpyrrolidon.

Als vorteilhaft hat es sich erwiesen, die Zusammensetzung der das Polymerisat I konstituierenden Monomeren b so zu wählen, daß sie der Monomerenzusammensetzung des Polymerisats II der sprühzutrocknenden wäßrigen Dispersion chemisch ähnlich ist.

Demgemäß eignen sich z.B. zur Sprühtrocknung von wäßrigen Dispersionen von Polymerisaten II, die in polymerisierter Form hauptsächlich aus Estern von 3 bis 6 C-Atomen aufweisenden $\alpha,\beta$-monoethylenisch ungesättigten Carbonsäuren mit $C_1$- bis $C_{12}$-Alkanolen, Styrol und/oder Vinyltoluolen aufgebaut sind, solche Polymerisate I mit besonderem Vorteil, die 20 bis 85 Gew.-%, bevorzugt 40 bis 80 und besonders bevorzugt 60 bis 75 Gew.-%, wenigstens eines Monomeren b aus der Gruppe umfassend Ester aus $C_3$- bis $C_6$-$\alpha,\beta$-monoethylenisch ungesättigten Carbonsäuren und $C_1$- bis $C_{12}$-Alkanolen, Styrol, Vinyltoluole und Acrylnitril, einpolymerisiert enthalten. Der Anteil der Monomeren a beträgt in diesen Fällen 15 bis 80, bevorzugt 20 bis 60, besonders bevorzugt 25 bis 40 Gew.-%. Als weitere Monomere b (Monomere b') können sie bis zu 10 Gew.-% eines oder mehrerer Monomeren aus der Gruppe umfassend $C_3$- bis $C_6$-$\alpha,\beta$-monoethylenisch ungesättigte Carbonsäuren sowie deren Amide und Monoester mit 2 bis 6 C-Atome aufweisenden mehrwertigen Alkoholen, einpolymerisiert enthalten. Bevorzugt enthalten die Polymerisate I jedoch keine Monomeren b' einpolymerisiert. Zur Sprühtrocknung von wäßrigen Dispersionen von Polymeren II die z.B. hauptsächlich Ester aus Vinylalkohol und niederen Carbonsäuren (in der Regel $C_1$- bis $C_5$-Carbonsäuren) einpolymerisiert enthalten, wird man hingegen zweckmäßigerweise Polymerisate I auf der Basis von Vinylestern als Monomere b einsetzen.

In erfindungsgemäßer Weise ist das Polymerisat I so zu wählen, daß seine MFT oberhalb derjenigen des Polymerisats II der sprühzutrocknenden wäßrigen Dispersion liegt. D.h., in der Regel wird das Polymerisat I so gewählt, daß seine Glasübergangstemperatur oberhalb der Glasübergangstemperatur des Polymerisats II der sprühzutrocknenden wäßrigen Dispersion liegt.

Normalerweise wird man daher die Gewichtsanteile der verschiedenen in das Polymerisat I einpolymerisierten Monomeren b, bezogen auf die Gesamtmenge an einpolymerisierten Monomeren b, so wählen, daß gemäß der Gleichung von Fox für ein nur aus der Gesamtmenge der einpolymerisierten Monomeren b in polymerisierter Form aufgebautes Polymerisat eine Glasübergangstemperatur $T_g^b$ resultiert, die oberhalb der Glasübergangstemperatur des Polymerisats II der sprühzutrocknenden Dispersion liegt.

Nach Fox (T.G. Fox, Bull. Am. Phys. Soc. (Ser.II) 1, 123 [1956]) gilt für die Glasübergangstemperatur von Mischpolymerisaten in guter Näherung:

$$\frac{1}{Tg} = \frac{X^1}{Tg^1} + \frac{X^2}{Tg^2} + \ldots\ldots \frac{X^n}{Tg^n},$$

wobei $X^1$, $X^2$, ......., $X^n$ die Massenbrüche 1, 2, ......, n und $Tg^1$, $Tg^2$, ......, $T_g^n$ die Glasübergangstemperaturen der jeweils nur aus einem der Monomeren 1, 2, ......, n aufgebauten Polymeren in Grad Kelvin bedeuten. Die Glasübergangstemperaturen dieser Homopolymerisate der Monomere b sind bekannt und z.B. in J. Brandrup, E.H. Immergut, Polymer Handbook 1st Ed. J. Wiley, New York 1966, 2nd Ed. J. Wiley, New York 1975, und 3rd Ed. J. Wiley, New York, 1989 aufgeführt.

Die Glasübergangstemperaturen von Homopolymerisaten der Monomeren a liegen nach eigenen Untersuchungen oberhalb von 60°C.

Besonders zweckmäßig ist es, die Sprühtrocknung einer wäßrigen Polymerisatdispersion bei einer Eingangstemperatur $T_E$ des Warmluftstroms von 100 bis 200°C, vorzugsweise 120 bis 160°C, und einer Ausgangstemperatur $T_A$ des Warmluftstroms von 30 bis 90°C, vorzugsweise 50 bis 70°C, durchzuführen. Das Versprühen der wäßrigen Polymerisatdispersion im Warmluftstrom kann z.B. mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte wäßrige Polymerisatdispersion und der Warmluftstrom werden vorzugsweise parallel geführt.

Vor diesem Hintergrund werden die einpolymerisierten Monomeren b in der Regel vorzugsweise so gewählt, daß die Bedingung $T_g^b > T_A$ erfüllt ist. D.h. bevorzugte Polymerisate I sind solche, für die $T_g^b \leq 60°C$, besonders bevorzugt $T_g^b \leq 80°C$ und ganz besonders bevorzugt $T_g^b \leq 100°C$ erfüllt ist. Üblicherweise liegt $T_g^b$ jedoch $\leq 150°C$. Besonders bevorzugt umfaßt das Polymerisat I als Monomere b ausschließlich Monomere aus der Gruppe Styrol, Methylmethacrylat, Acrylnitril und tert.-Butylmethacrylat. Ganz besonders bevorzugt enthält es als Monomere b ausschließlich Methylmethacrylat einpolymerisiert.

Die Polymerisate I können bei 25°C sowohl wasserlöslich als auch wasserunlöslich sein, so daß sie in an sich bekannter Weise z.B. nach der Methode der radikalischen Lösungs-, Suspensions- oder Emulsionspolymerisaten hergestellt werden können. Sind die Polymerisate I wasserunlöslich, werden sie zweckmäßigerweise nach dem Verfahren der radikalischen wäßrigen Emulsionspolymerisation hergestellt. Dieses kann sowohl unter Mitverwendung von Dispergiermitteln wie z.B. Schutzkolloiden oder Emulgatoren, als auch in Abwesenheit derselben erfolgen. Mit Vorteil wird die Semi-Batch Fahrweise angewendet. D.h. der überwiegende Teil der Monomeren wird dem Polymerisationsgefäß nach Maßgabe des erfolgten Polymerisationsumsatzes kontinuierlich zugeführt. Werden Emulgatoren mitverwendet, üblicherweise bis zu 3 Gew.-%, bezogen auf die zu polymerisierenden Monomeren, erfolgt die Zufuhr der Monomeren a und b vorzugsweise vereint in in wäßrigem Medium voremulgierter Weise. Erfolgt die Polymerisation in Abwesenheit von Dispergiermitteln, erfolgt die Zufuhr der Monomeren a zweckmäßig von der Zufuhr der Monomeren b räumlich getrennt, da die Monomeren a in den Monomeren b eine zu geringe Löslichkeit aufweisen. Vorzugsweise werden die Monomeren a in diesem Fall als wäßrige Lösung zugeführt.

Die resultierende wäßrige Dispersion des Polymerisats I kann der sprühzutrocknenden wäßrigen Dispersion des Polymerisats II als solche unmittelbar zugesetzt werden. Selbstverständlich müssen in diesem Fall die Dispergiermittel der wäßrigen Dispersion des Polymerisats I mit jenen der wäßrigen Dispersion des Polymerisats II verträglich sein, was im Zweifelsfall an Hand weniger Vorversuche überprüft werden kann. Vorzugsweise werden für beide ausschließlich anionische und/oder nichtionische Emulgatoren verwendet, deren Verträglichkeit in der Regel gegeben ist.

Gebräuchliche Emulgatoren sind z.B. Blockcopolymere von Ethylenoxid und Propylenoxid, ethoxylierte Mono-, Di- und Tri-Alkylphenole (EO-Grad: 3 bis 50, Alkylrest: $C_4$- bis $C_9$), ethoxylierte Fettalkohole (EO-Grad: 3 bis 50, Alkylrest: $C_8$- bis $C_{36}$), sowie Alkali- und Ammoniumsalze von Alkylsulfaten (Alkylrest: $C_8$- bis $C_{12}$), von Schwefelsäurehalbestern ethoxylierter Alkanole (EO-Grad: 4 bis 30, Alkylrest: $C_{12}$- bis $C_{18}$) und ethoxylierte Alkylphenole (EO-Grad: 3 bis 50, Alkylrest: $C_4$- bis $C_9$), von Alkylsulfonsäuren (Alkylrest: $C_{12}$- $C_{18}$) und von Alkylarylsulfonsäuren (Alkylrest: $C_9$- bis $C_{18}$). Weitere geeignete Dispergiermittel sind Verbindungen der allgemeinen Formel II

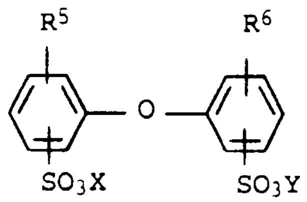

(II),

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen II sind allgemein bekannt, z.B. aus der US-A 4 269 749, und im Handel erhältlich. Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidsulfate, als auch um Azoverbindungen handeln. Auch können kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, verwendet werden. Ferner eignen sich kombinierte Systeme, die über Reduktionsmittel und Peroxid hinaus, eine geringe Menge einer im Polymerisationsmedium löslichen Metallverbindung, deren metallische Komponente in mehreren Wertigkeitsstufen auftreten kann, enthalten, z.B. Ascorbinsäure/Eisen Eisen(II)sulfat/Wasserstoffperoxid. Üblicherweise beträgt die Menge der eingesetzten radikalischen Initiatorsysteme, bezogen auf die Gesamtmenge der zu polymerisierenden Monomeren, 0,1 bis 10 Gew.-%

Polymerisationsdruck und Polymerisationstemperatur sind von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist möglich, so daß die Polymerisationstemperatur auch 100°C überschreiten und bis zu 130°C betragen kann. Vorzugsweise werden leichtflüchtige Monomere wie Ethylen, Butadien oder Vinylchlorid unter erhöhtem Druck polymerisiert.

Erfindungsgemäß besonders vorteilhaft sind solche wäßrigen Dispersionen von Polymerisaten I, deren Lichtdurchlässigkeit bei 25°C (LD-Wert) im auf einen Feststoffgehalt von 0,01 Gew.-% verdünnten Zustand, relativ zu reinem Wasser und bei einer Schichtdicke von 2,5 cm, ≥ 90 % beträgt.

Weiterhin ist es erfindungsgemäß von Vorteil, wenn der K-Wert der dispergierten Polymerisate I bei 25°C in Dimethylformamid (DMF) 20 bis 60 beträgt. Der K-Wert ist eine relative Viskositätszahl, die in Analogie zur DIN 53726 bestimmt wird. Er beinhaltet hier die Fließgeschwindigkeit von reinem DMF relativ zur Fließgeschwindigkeit von DMF, das von einer 20 gew.-%igen wäßrigen Dispersion des Polymerisats I, die, ausgehend von der vollsauren Form des Polymerisats I, mittels 2 normaler wäßriger Natriumhydroxidlösung auf einen pH-Wert von 7 eingestellt worden ist, so viel enthält, daß es einen Feststoffgehalt von 1 Gew.-% aufweist. Der K-Wert charakterisiert das mittlere Molekulargewicht des Polymerisats (vgl. dazu Cellulosechemie, Vol. 13 (1932), S. 58-64, und Kirk-Othmer, Encyclopedia of Chemical Technology, Vol. 23, S. 967-968). Ein hoher K-Wert entspricht dabei einem hohen mittleren Molekulargewicht. Niedere K-Werte sind z.B. in an sich bekannter Weise dadurch erhältlich, daß die Polymerisation in Anwesenheit wirksamer Mengen von das Molekulargewicht regelnden Substanzen durchgeführt wird.

Als solche eignen sich beispielsweise der Ester aus Thioglykolsäure und 2-Ethylhexanol oder tert.-Dodecylmercaptan.

In der Regel setzt man die Polymerisate I der wäßrigen Dispersion der Polymerisate II in Mengen von 5 bis 40 Gew.-%, bezogen auf das Polymerisat II, zu. Handelt es sich bei der das Polymerisat II umfassenden wäßrigen Polymerisatdispersion um eine Primärdispersion, d.h. um eine solche Polymerisatdispersion, die ihrerseits nach der Methode der radikalischen wäßrigen Emulsionspolymerisation hergestellt wird, kann das Polymerisat I als hilfsmittel sowohl vor, während und/oder nach der Emulsionspolymerisation der das Polymerisat II konstituierenden Monomeren zugesetzt werden. Vorzugsweise wird es der fertigen, das Polymerisat II dispergiert enthaltenden wäßrigen Polymerisatdispersion zugesetzt. Selbstverständlich kann es sich dabei auch um eine Sekundärsdispersion des Polymerisats II handeln. In diesem Fall wird das Polymerisat II z.B. in an sich bekannter Weise nach der Methode der radikalischen Lösungspolymerisation hergestellt und nachträglich in eine wäßrige Polymerisatdispersion überführt. Bei nachträglichem Zusatz des Polymerisats I zur in der Regel bereits Dispergiermittel (üblicherweise in Mengen von bis zu 3 Gew.-% bezogen auf die Menge des Polymerisats II) umfassenden Polymerisatdispersion des Polymerisats II, wird das Polymerisat I, bezogen auf die Menge des Polymerisats II, vorzugsweise in Mengen von 5 bis 25, ganz besonders bevorzugt in Mengen von 10 bis 20 Gew.-% zugesetzt.

Als modifizierendes Additiv in mineralischen Bindemitteln oder Putzen, bzw. als ausschließliches Bindemittel für Kunstharz-Putze sind insbesondere solche Dispersionspolymerisate II von Bedeutung, die in polymerisierter Form enthalten:

| | |
|---|---|
| 70 bis 100 Gew.-% | wenigstens eines Monomeren aus der Gruppe umfassend Styrol, Vinyltoluole, Ester aus 3 bis 6 C-Atome aufweisenden α,β-monoethylenisch ungesättigten Carbonsäuren und 1 bis 12 C-Atome aufweisenden Alkanolen und Ester aus Vinylalkohol und 1 bis 18 C-Atome aufweisenden Alkancarbonsäuren und |
| 0 bis 30 Gew.-% | sonstige copolymerisierbare Monomere, |

mit der Maßgabe, daß die Monomerenzusammensetzung innerhalb dieses Rasters so gewählt wird, daß nach Fox eine Glasübergangstemperatur $T_g \leq 60°C$, vorzugsweise ≤ 40 und besonders bevorzugt ≤ 30°C resultiert.

Unter diesen werden wiederum jene Dispersionspolymerisate II bevorzugt, die in polymerisierter Form, bei entsprechender übergangstemperatur, gemäß nachfolgendem Raster einpolymerisiert enthalten:

| | |
|---|---|
| 50 bis 90 Gew.-% | wenigstens eines Esters bestehend aus 3 bis 6 C-Atome aufweisenden α,β-monoethylenisch ungesättigten Carbonsäuren, und 1 bis 12 C-Atomen aufweisenden Alkanolen, ausgenommen Methylmethacrylat und tert.-Butylacrylat, |
| 10 bis 50 Gew.-% | wenigstens eines Monomeren aus der Gruppe umfassend Methylmethacrylat, Acrylnitril, tert.-Butylacrylat, tert.-Butylmethacrylat, Styrol und Vinyltoluole und |
| 0 bis 5 Gew.-% | eines oder mehrere Monomere aus der Gruppe umfassend 3 bis 6 C-Atome aufweisende α, β-monoethylenisch ungesättigte Carbonsäuren und deren Amide. |

Insbesondere wenn Kunstharz-Putz mit erhöhter Wasserfestigkeit angestrebt werden, wird der Anteil der Monomeren der letztaufgeführten Gruppe möglichst gering gehalten. Die wäßrigen Dispersionen der Polymerisate II sind in an sich bekannter Weise nach der Methode der radikalischen wäßrigen Emulsionspolymerisation erhältlich. Bezüglich der zu verwendenden Dispergiermittel und Polymerisationsinitiatoren gilt das bezüglich der wäßrigen Dispersionen der Polymerisate I gesagte. Vorzugsweise beträgt ihr LD-Wert bei Verdünnung auf 0,01 Gew.-% < 50 %. Die wäßrigen Dispersionen der Polymerisate II lassen sich unter Zusatz von Polymerisaten I nach der Methode der Sprühtrocknung in einfacher Weise zu im wäßrigen Medium in voll befriedigender Weise redispergierbaren Polymerisatpulvern trocknen. Diese redispergierbaren Polymerisatpulver eignen sich insbesondere zur Modifizierung von mineralischen Bindemitteln sowie als Bindemittel für Kunstharz-Putze. Selbstverständlich eignen sie sich auch als Bindemittel für Dispersionsfarben sowie als Basis für Klebstoffe und Massen zum Beschichten.

Eine ganz besonders bemerkenswerte Eigenschaft der das erfindungsgemäße Sprühhilfsmittel enthaltenden Polymerisatpulver ist, daß sie sich zur Formulierung von Kunstharz-Putzen eignen, deren Wasserfestigkeit höher ist als diejenige der Putze, die mit der entsprechenden an Sprühhilfsmittel freien Ausgangsdispersion gebildet werden.

In typischer Weise enthalten Trockenzubereitungen von Kunstharz-Putzen:

| | |
|---|---|
| 3 bis 15 Gew.-%, | vorzugsweise 5 bis 10 Gew.-%, redispergierbares Polymerisatpulver, |
| 17 bis 85 Gew.-% | mineralische Füllstoffe (vorzugsweise Kalk) und/oder Pigmente und |
| 0 bis 5 Gew.-% | Hilfsmittel wie Entschäumer, Filmbilde-, Verdickungs-, Konservierungs- oder Wasserretentionsmittel. |

Beispiele für geeignete mineralische Füllstoffe und Pigmente sind Calcit, Glimmer, Kaolin, Schwerspat, Talkum, Quarzsand, Quarzmehl, Kreide oder Titandioxid.

Zur bunten Einfärbung können auch organische Pigmente mitverwendet werden. Leichtzuschlagstoffe, wie z.B. Vermiculit oder Bimsstein, erhöhen die Wärmedämmung eines Putzes. Durch einen Zusatz von Polyamid- oder Polyesterfasern kann die Gefahr der Bildung von feinen Haarrissen gemindert werden.

Die erhöhte Wasserfestigkeit wird darauf zurückgeführt, daß sich aus dem erfindungsgemäßen Sprühhilfsmittel und den polyvalenten Metallionen der Füllstoffe und/oder Pigmente eine hydrophobe Einheit bildet. Bemerkenswerterweise spielt diesbezüglich der große molare Überschuß an mineralischen Füllstoffen und/oder Pigmenten, bezogen auf die Menge des im Polymerisatpulver enthaltenen erfindungsgemäßen Sprühhilfsmittels, eine tragende Rolle. Mit Vorteil enthält die Trockenzubereitung des Kunstharz-Putzes, bezogen auf das polymere Bindemittel, bis zu 60 Gew.-% Calciumoxid und/oder Calciumhydroxid.

Weitere vorteilhafte Eigenschaften der erfindungsgemäßen Sprühhilfsmittel sind ihre Farblosigkeit, sowie ihr im wesentlichen neutrales Verhalten bezüglich der Verfestigungsdauer mineralischer Bindemittel, insbesondere derjenigen von Zement.

Abschließend sei darauf hingewiesen, daß im Rahmen der erfindungsgemäßen Sprühtrocknung selbstverständlich zusätzlich bereits bekannte Sprühhilfsstoffe, wie z.B. hochdisperse Kieselsäure als Antibackmittel, zusätzlich mitverwendet werden können.

Beispiele

1) Herstellung wäßriger Dispersionen von erfindungsgemäßen Polymerisaten I (DPIa bis DPId) und einem Vergleichspolymerisat (DVPI)

DPIa: In einem Polymerisationsgefäß wurde eine Lösung von 1,76 g Natriumperoxidisulfat in 1050 g Wasser vorgelegt und auf die Polymerisationstemperatur von 85°C erwärmt. Anschließend wurden, unter Aufrechterhaltung der Polymerisationstemperatur, dem Polymerisationsgefäß, zeitgleich beginnend, innerhalb von 2 h Zuläufe I bis III synchron zugeführt. Anschließend wurde das Reaktionsgemisch 1 h bei 85°C sich selbst überlassen. Danach wurden 30 g einer 20 gew.-%igen wäßrigen Lösung des Natriummetallsalzes der Hydroxymethansulfinsäure zugegeben und auf Raumtemperatur abgekühlt.

| | | |
|---|---|---|
| Zulauf I | 280 g | Methylmethacrylat und |
| | 1 g | Ester aus Thioglykolsäure und 2-Ethylhexanol; |
| Zulauf II | 120 g | 2-Acrylamido-2-methylpropansulfonsäure |
| | 400 g | Wasser und |
| | 150 g | 20 gew.-%ige wäßrige Natriumhydroxidlösung; |
| Zulauf III | 15,84 g | Natriumperoxidisulfat und |
| | 150 g | Wasser. |

Der Feststoffgehalt der resultierenden wäßrigen Polymerisatdispersion DPIa betrug 20 Gew.-%. Ihr pH-Wert lag bei 5,8 und der LD-Wert (25°C) in 0,01 gew.-%iger Verdünnung war 97 %. Der K-Wert bei 25°C in DMF betrug 33.

DPIb: Wie DPIa, die Vorlage umfaßte jedoch eine Lösung von 12 g Natriumperoxidisulfat in 1278 g Wasser und anstelle von Zuläufen I bis III wurden lediglich die Zuläufe I und II eingesetzt:

| | | |
|---|---|---|
| Zulauf I | 300 g | Methylmethacrylat |
| Zulauf II | 100 g | 2-Sulfoethyl-methacrylat und |
| | 319 g | Wasser. |

Der Feststoffgehalt der resultierenden wäßrigen Polymerisatdispersion DPIb betrug 20,5 Gew.-%. Der pH-Wert lag bei 1 und der LD-Wert (25°C) in 0,01 %iger Verdünnung war ca. 100 %. Der K-Wert bei 25°C in DMF betrug 38.

DPIc: Wie DPIa, die Vorlage umfaßte jedoch eine Lösung von 4 g Natriumperoxidisulfat in 1057 g Wasser und anstelle von Zuläufen I bis III wurden lediglich Zuläufe I und II eingesetzt:

| | | |
|---|---|---|
| Zulauf I | 240 g | Methylmethacrylat, |
| | 160 g | 3-Sulfopropyl-methacrylat |
| | 2,8 g | tert.-Dodecylmercaptan |
| | 2 g | einer 20 gew.-%igen wäßrigen Lösung von ethoxyliertem p-Isooctylphenol (EO-Grad: 25) = Emulgatorlösung 1 |
| | 2,3 g | einer 35 gew.-%igen wäßrigen Lösung des Na-Salzes des Schwefelsäurehalbesters von ethoxyliertem p-Isooctylphenol (EO-Grad: 25) = Emulgatorlösung 2 und |

(fortgesetzt)

| | | |
|---|---|---|
| Zulauf II | 454 g | Wasser; |
| | 8 g | Natriumperoxidisulfat und |
| | 100 g | Wasser. |

Der Feststoffgehalt der resultierenden wäßrigen Polymerisatdispersion DPIc betrug 20,6 Gew.-%. Ihr pH-Wert lag bei 2,2 und der LD-Wert (25°C) in 0,01 gew.-%iger Verdünnung war ca. 100 %. Der K-Wert bei 25°C in DMF betrug 28.

DPId: Wie DPIa, die Vorlage umfaßte jedoch eine Lösung von 12 g Natriumperoxidisulfat in 1145 g Wasser und anstelle von Zuläufen I bis III wurde lediglich ein Zulauf I eingesetzt:

| | | |
|---|---|---|
| Zulauf I | 97,6 g | Methylmethacrylat, (40 mol.-%) |
| | 302,4 g | 2-Acrylamido-2-methylpropansulfonsäure, (60 mol.-%) |
| | 2,8 g | Ester aus Thioglykolsäure und 2-Ethylhexanol |
| | 77,9 g | einer 25 gew.-%igen wäßrigen Natriumhydroxidlösung (neutralisiert ein Drittel der sauren Funktionen) |
| | 2 g | Emulgatorlösung 1 |
| | 2,3 g | Emulgatorlösung 2 und |
| | 491 g | Wasser. |

Der Feststoffgehalt der resultierenden wäßrigen Polymerisatdispersion DPId betrug 20,3 Gew.-%. Ihr pH-Wert lag bei 1,5 und der LD-Wert (25°C) in 0,01 gew.-%iger Verdünnung war ca. 100 %. Der K-Wert bei 25°C in DMF betrug 20.

DVPI: Wie DPId, Zulauf I enthielt jetzt jedoch 174,8 g Methylmethacrylat (40 mol.-%) und 225,2 g Methacrylsäure (60 mol.-%) anstelle der für DPId verwendeten Mengen Methylmethacrylat und 2-Acrylamido-2-methylpropansulfonsäure. Ferner wurden in Zulauf I 139,2 g der 25 gew.-%igen wäßrigen Natriumhydroxidlösung eingesetzt, anstelle der 77,9 g (neutralisiert ein Drittel der sauren Funktionen).
Der Feststoffgehalt der resultierenden wäßrigen Polymerisatdispersion DVPI betrug 20,2 Gew.-%. Ihr pH-Wert lag bei 5,9 und der LD-Wert (25°C) in 0,01 gew.-%iger Verdünnung war 90 %. Der K-Wert bei 25°C in DMF betrug 40.

2) Herstellung wäßriger Dispersionen von Polymerisaten II (DPIIa bis DPII c)

DPIIa: In einem Polymerisationsgefäß wurde eine Lösung aus

| | |
|---|---|
| 294 g | Wasser |
| 7,7 g | einer 10 gew.-%igen wäßrigen Ameisensäurelösung, |
| 6,6 g | einer 20 gew.-%igen wäßrigen Lösung von Polyacrylamid, |
| 3,3 g | Natriumhydrogencarbonat, |
| 11 g | Emulgatorlösung 1 und |
| 0,9 g | Emulgatorlösung 2 |

vorgelegt und auf die Polymerisationstemperatur von 90°C erwärmt. Anschließend wurden zeitgleich beginnend die Zuläufe I (innerhalb von 2 h) und II (innerhalb von 2,5 h) unter Aufrechterhaltung der Polymerisationstemperatur dem Polymerisationsgefäß kontinuierlich zugeführt. Danach wurde das Polymerisationsgefäß weitere 2 h bei 90°C sich selbst überlassen. Anschließend wurde auf Raumtemperatur abgekühlt und mit 5,5 g einer 20 gew.-%igen wäßrigen Calciumhydroxid-Aufschlämmung neutralisiert.
Der Feststoffgehalt der resultierenden wäßrigen Polymerisatdispersion DPIIa betrug 54,7 Gew.-%. Ihr pH-Wert lag bei 8,1 und der LD-Wert (25°C) betrug 9 % (0.01 gew.-%ige Verdünnung). Das dispergierte Polymerisat PIIa wies eine Glasübergangstemperatur von -1°C auf.

| | | |
|---|---|---|
| Zulauf I | 682 g | n-Butylacrylat |

(fortgesetzt)

| | | |
|---|---|---|
| | 385 g | Styrol |
| | 44 g | einer 50 gew.-%igen wäßrigen Lösung von Acrylamid |
| | 73,3 g | einer 15 gew.-%igen wäßrigen Lösung von Methacrylamid |
| | 16,5 g | Emulgatorlösung 1 |
| | 22,6 g | Emulgatorlösung 2 und |
| | 235 g | Wasser. |
| Zulauf II | 6,4 g | Natriumperoxidisulfat in |
| | 180 g | Wasser. |

DPIIb: In einem Polymerisationsgefäß wurde eine Mischung aus

| | |
|---|---|
| 500 g | Wasser |
| 2,5 g | Natriumacetat |
| 2,5 g | Butenol und |
| 10 g | einer ethoxylierten Cellulose (Natrosol® 250 GR) |

auf die Polymerisationstemperatur von 80°C erwärmt. Dann wurden auf einmal zunächst 150 g Zulauf I und danach 10 g Zulauf II in das Polymerisationsgefäß eingetragen und 20 min bei 80°C polymerisiert. Anschließend wurde zeitgleich beginnend die Restmenge von Zulauf I (innerhalb von 3 h) und die Restmenge von Zulauf II (innerhalb von 3,5 h) unter Aufrechterhaltung der 80°C, kontinuierlich zudosiert. Danach wurde noch 1 h bei 80°C gerührt und schließlich auf Raumtemperatur abgekühlt.
Der Feststoffgehalt der resultierenden wäßrigen Polymerisatdispersion DPIIb betrug 50,2 Gew.-%. Ihr pH-Wert lag bei 4 und LD-Wert (25°C) betrug 20 % (0,01 gew.-%ige Verdünnung). Das dispergierte Polymerisat PIIb wies eine Glasübergangstemperatur von -2°C auf.

| | | |
|---|---|---|
| Zulauf I | 600 g | Vinylpropionat |
| | 200 g | tert.-Butylacrylat |
| | 200 g | n-Butylacrylat |
| | 160 g | eines Gemisches aus 150 g Emulgatorlösung 1 und 10 g eines Blockcopolymeren aus Ethylenoxid und Propylenoxid (molares Verhältnis EO:PO = 0,7 und das relative zahlenmittlere Molekulargewicht = 3200) und |
| | 343 g | Wasser; |
| Zulauf II | 5 g | Natriumperoxidsulfat in |
| | 100 g | Wasser. |

DPIIc: In einem Polymerisationsgefäß wurde eine Lösung aus

| | |
|---|---|
| 6000 g | Wasser und |
| 17 g | einer 45 gew.-%igen wäßrigen Lösung der Dowfax 2A1 entsprechenden grenzflächenaktiven Substanz |

auf die Polymerisationstemperatur von 80°C erwärmt. Anschließend wurden nacheinander auf einmal 1087 g Zulauf I und 108 g Zulauf II ins Polymerisationsgefäß gegeben und 30 min bei 80°C polymerisiert. Anschließend wurden unter Aufrechterhaltung der Polymerisationstemperatur die Restmengen der Zuläufe I und II zeitgleich beginnend während 3,5 h kontinuierlich zugeführt. Anschließend wurde das Reaktionsgemisch 4 h bei 80°C sich selbst überlassen. Abschließend wurde auf Raumtemperatur abgekühlt und mit 420 g einer 25 gew.-%igen wäßrigen Natriumhydroxidlösung neutralisiert.
Der Festgehalt der resultierenden wäßrigen Polymerisatdispersion DPIIc betrug 50,9 %. Ihr pH-Wert lag bei 8 und der LD-Wert (25°C) betrug 46 % (0,01 gew.-%ige Verdünnung). Das dispergierte Polymerisat PIIc wies eine Glasübergangstemperatur von 60°C auf.

| | | |
|---|---|---|
| Zulauf I | 12150 g | Styrol |
| | 2250 g | Butadien |
| | 450 g | einer 50 %igen wäßrigen Lösung von Acrylamid |
| | 375 g | Acrylsäure |
| | 120 g | tert.-Dodecylmercaptan |
| | 117 g | einer 45 gew.-%igen wäßrigen Lösung der Dowfax 2A1 entsprechenden grenzflächenaktiven Substanz |
| | 250 g | einer 15 gew.-%igen wäßrigen Lösung des Natriumsalzes des Schwefelsäurehalbesters von Laurylalkohol und |
| | 6033 g | Wasser. |
| Zulauf II | 150 g | Natriumperoxidsulfat und |
| | 200 g | Wasser. |

3) Herstellung von Polymerisatpulvern durch Sprühtrocknung wäßriger Polymerisatdispersionen

Die Sprühtrocknung wurde in einem Labortrockner des Typs Minor der Firma Niro mit einer Leistung von 2 kg/h durchgeführt. Die zu trocknende wäßrige Polymerisatdispersion wurde mittels einer rotierenden Scheibe versprüht. Die Eingangstemperatur der Trockenluft betrug 130°C, die Ausgangstemperatur der Trockenluft lag bei 60 bis 64°C.

Zur Sprühtrocknung wurden wäßrigen Polymerisatdispersionen DPIIi aus 2 als Sprühhilfsmittel SHM wäßrige Polymerisatdispersionen DPIi aus 1) zugesetzt und die resultierende Mischung auf einen einheitlichen Feststoffgehalt von 35 Gew.-% eingestellt.

Die Ergebnisse der Sprühtrocknung zeigt nachfolgende Tabelle I. X steht für den Gehalt an Sprühhilfsmittel PIi, ausgedrückt in Gew.-% bezogen auf die Menge des sprühzutrocknenden Polymerisats PIIi.

Tabelle I

| Pulver-Nr. | SHM | DPIIi | X | Wandbelag | Pulverausbeute (% d. Theorie) |
|---|---|---|---|---|---|
| 1 | DPIa | DPIIa | 15 | fast nicht | 89 |
| 2 | DPIb | DPIIa | 10 | fast nicht | 88 |
| 3 | DPIc | DPIIa | 10 | fast nicht | 90 |
| 4 | DPIa | DPIIb | 15 | wenig | 78 |
| 5 | DPIa | DPIIc | 15 | fast nicht | 83 |
| 6 | DPId | DPIIa | 15 | fast nicht | 89 |
| 7 | DVPI | DPIIa | 15 | fast nicht | 90 |

Die Pulver 1 bis 6 sind im wäßrigem Medium in voll befriedigender Weise redispergierbar. Die Polymerisatdispersionen DPIIa, DPIIb und DPIIc lassen sich ohne Mitverwendung von Sprühhilfsmittel unter ansonsten identischen Sprühtrocknungsbedingungen nicht sprühtrocknen. Es entsteht ein dicker schwer entfernbarer Wandbelag, der in wäßrigem Medium nicht redispergierbar ist. Erfindungsgemäß entsteht besonders wenig Wandbelag dann, wenn die in DIN 53445 definierte dynamische Glasübergangstemperatur $T_{\lambda max}$ des Sprühhilfsmittels möglichst weit oberhalb von $T_E$ liegt. Ferner ist die Pulverausbeute dann besonders günstig, wenn die MFT von DPIi möglichst weit oberhalb von $T_A$ liegt (wobei derjenige pH-Wert zugrunde zu legen ist, der im Gemisch mit der sprühtrocknenden Polymerisatdispersion DPIIi vorliegt).

4) Formulierung von Kunstharz-Putzen und Untersuchung der Wasserfestigkeit der daraus resultierenden Putze

Verwendet wurde nachfolgende Grundformulierung, bestehend aus:

| | |
|---|---|
| 10 Gew.-Teile | weißer Calcit eines mittleren Teilchendurchmessers von 130 µm (Calcidar® 130 der Fa. Omya GmbH, Köln) |
| 33,7 Gew.-Teile | weißer Calcit eines mittleren Teilchendurchmessers von 25 µm (Calcidar® 40 der Fa. Omya GmbH, Köln) |

| | |
|---|---|
| 10 Gew.-Teile | eines Gemisches aus Glimmer, Calcit und Quarz mit einem mittleren Teilchendurchmessers von 600 µm (Plastorit® 1 der Naintsch Mineralwerke, Graz) |
| 37,4 Gew.-Teile | weißer Calcit eines mittleren Teilchendurchmessers von 1200 µm (Carolith® 1000 der Fa. Omya GmbH, Köln) |
| 3,7 Gew.-Teile | Titandioxid (Kronos® RN 56 der Kronos Titan GmbH, Leverkusen) |
| 2,5 Gew.-Teile | pulverförmiger Entschäumer (Lumiten® E-P 3108 der BASF AG, Ludwigshafen) |
| 0,2 Gew.-Teile | pulverförmige Cellulose (Culminal® MHPC 20000 der Henkel KG, Düsseldorf) |
| 2,5 Gew.-Teile | Calciumoxid |
| 7,5 Gew.-Teile | Polymerisatpulver aus 3) oder Dispersion aus 2) (trocken gerechnet) als Bindemittel |
| 20 bis 30 Gew.-Teile | Wasser, bis zur verarbeitungsgerechten Konsistenz. |

Die Putzzubereitungen wurden in verarbeitungsgerechter Stärke auf eine nicht grundierte, stark saugende Eterplan®-Platte aufgetragen und 7 Tage unter Normalbedingungen trocken gelagert. Anschließend erfolgte bei Raumtemperatur 24 stündige Lagerung unter Wasser. Danach wurde an Hand der Haftung auf dem Untergrund sowie der Kratzfestigkeit des Putzes dessen Wasserfestigkeit in einer Notenskala von 1 bis 6 (Schulnotensystem) beurteilt. Die Ergebnisse als Funktion des verwendeten Bindemittels zeigt die Tabelle II.

Tabelle II

| Bindemittel | Wasserfestigkeit |
|---|---|
| DPIIa | 2 |
| Pulver 1 aus 3) | 1 |
| Pulver 6 aus 3) | 1 |
| Pulver 7 aus 3) (Vergleich) | 4 |
| DPIIa + DPIa vor Sprühtrocknung | 1 |

5) Modifizierung von mineralischen Bindemitteln

Ein Gemisch aus 300 g Portlandzement 35F der Fa. Märker und 30 g Polymerisatpulver aus 3) bzw. 30 g DPIIi aus 2) (trocken gerechnet) wurde mit Wasser bis zum Erreichen von Normensteife angerührt und anschließend nach DIN 1164 mit der Vicat-Nadel das Abbindeverhalten der Zubereitung ermittelt.

Das Ergebnis zeigt Tabelle III.

Tabelle III

| Modifizierendes Polymerisat | Abbindebeginn | Abbindeende |
|---|---|---|
| DPIIa | 6 h | 8 h |
| Pulver 1 aus 3) | 6 h | 8 h |
| Pulver 6 aus 3) | 6 h | 8 h |
| Pulver 7 aus 3) (Vergleich) | > 90 h | > 90 h |

**Patentansprüche**

**1.** Verwendung von Polymerisaten I, die, in polymerisierter Form, zu 15 bis 80 Gew.-% aus wenigstens einem Monomeren der allgemeinen Formel I und/oder deren Salzen (Monomere a)

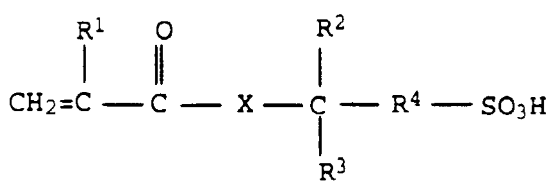

(I),

mit

$R^1$, $R^2$, $R^3$: unabhängig voneinander H oder $C_1$- bis $C_3$-Alkyl,
$R^4$: $C_1$- bis $C_5$-Alkylen und
X : O oder NH,

und
zu 20 bis 85 Gew.-% aus wenigstens einem radikalisch copolymerisierbaren Monomeren (Monomere b) mit der Maßgabe aufgebaut sind, daß die mittlere molare Löslichkeit der Bestandteile des Gemisches der insgesamt einpolymerisierten Monomeren b bei 25°C in Wasser geringer ist, als die entsprechend definierte mittlere molare Löslichkeit der Bestandteile des Gemisches der insgesamt einpolymerisierten Monomeren a, als Hilfsmittel bei der Sprühtrocknung wäßriger Dispersionen von von den Polymerisaten I verschiedenen Polymerisaten II.

**2.** Verwendung von Polymerisaten I nach Anspruch 1, die als wenigstens ein Monomeres a 2-Acrylamido-2-methylpropansulfonsäure und/oder deren Salze einpolymerisiert enthalten.

**3.** Verwendung von Polymerisaten I nach Anspruch 1 oder 2, deren einpolymerisiert enthaltene Monomere b so ausgewählt sind, daß die Glasübergangstemperatur $T_g^b$ eines nur aus den Monomeren b aufgebauten Polymerisates nach Fox ≥ 60°C betragen würde.

**4.** Verfahren zur Sprühtrocknung wäßriger Dispersionen wenigstens eines Polymerisats II, dadurch gekennzeichnet, daß man als Hilfsmittel wenigstens ein Polymerisat I zusetzt.

**5.** Polymerisatpulver, erhältlich nach einem Verfahren gemäß Anspruch 4.

**6.** Verfahren nach Anspruch 4, dadurch gekennzeichnet, daß die Eingangstemperatur der Trockenluft 100 bis 200°C und die Ausgangstemperatur der Trockenluft 30 bis 90°C beträgt.

**7.** Kunstharz-Putz, enthaltend wenigstens ein Polymerisatpulver nach Anspruch 5.

**8.** Mineralisches Bindemittel, enthaltend wenigstens ein Polymerisatpulver nach Anspruch 5.

**9.** Kunstharz-Putz Trockenzubereitung, enthaltend wenigstens ein Polymerisatpulver nach Anspruch 5.

**10.** Verwendung von Polymerisatpulvern nach Anspruch 5 in Zubereitungen zum Beschichten oder Kleben.

## Claims

**1.** Use of polymers I which are composed of, in polymerized form,
from 15 to 80% by weight of at least one monomer of the formula I and/or the salts thereof (monomers a)

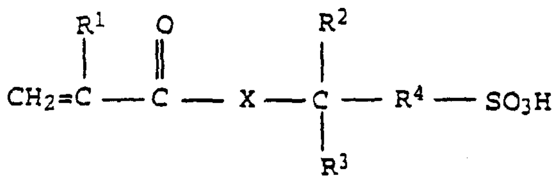

(I),

where $R^1$, $R^2$ and $R^3$ independently of one another are each H or $C_1$-$C_3$-alkyl, $R^4$ is $C_1$-$C_5$-alkylene and X is O or NH, and
from 20 to 85% by weight of at least one monomer capable of undergoing free radical copolymerization (monomers b), with the proviso that the average molar solubility of the components of the mixture of all the monomers b polymerized at 25°C in water is lower than the correspondingly defined average molar solubility of the components of the mixture of all the monomers a polymerized, as assistants in the spray drying of aqueous dispersions of polymers II which differ from the polymers I.

**2.** Use of polymers I as claimed in claim 1, which contain, as at least one monomer a, 2-acrylamido-2-methylpropanesulfonic acid and/or the salts thereof as polymerized units.

**3.** Use of polymers I as claimed in claim 1 or 2, whose monomers b contained as polymerized units are selected so that the glass transition temperature $T_g^b$ of a polymer composed only of the monomers b would be ≥ 60°C according to Fox.

**4.** A process for spray drying aqueous dispersions of at least one polymer II, wherein at least one polymer I is added as an assistant.

**5.** A polymer powder obtainable by a process as claimed in claim 4.

**6.** A process as claimed in claim 4, wherein the inlet temperature of the drying air is from 100 to 200°C and the outlet temperature of the drying air is from 30 to 90°C.

**7.** A synthetic resin render containing at least one polymer powder as claimed in claim 5.

**8.** A mineral binder containing at least one polymer powder as claimed in claim 5.

**9.** A dry synthetic resin render composition containing at least one polymer powder as claimed in claim 5.

**10.** Use of polymer powders as claimed in claim 5 in compositions for coating or adhesion.

## Revendications

**1.** Utilisation de polymères I en tant qu'adjuvant pour le séchage par pulvérisation de dispersions aqueuses de polymères II, différents des polymères I qui sont construits, sous forme polymérisée,
pour 15 à 80 % en poids à partir d'au moins un monomère de formule générale I et/ou de ses sels (monomère a)

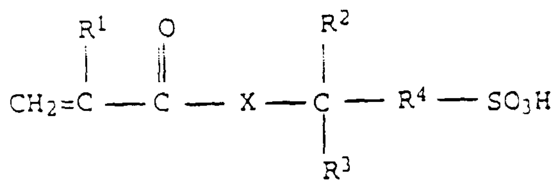

(I),

avec

| | |
|---|---|
| $R^1$, $R^2$, $R^3$: | indépendamment les uns des autres, atome d'hydrogène ou groupement alkyle en $C_1$-$C_3$, |
| $R^4$ : | groupement alkylène en $C_1$-$C_5$ et |
| X : | atome d'oxygène ou NH, |

et
pour 20 à 85 % en poids à partir d'au moins un monomère copolymérisable de façon radicalaire (monomère b), étant spécifié que la solubilité molaire moyenne à 25°C dans l'eau des constituants du mélange de l'ensemble des monomères b en liaison polymère est plus petite que la solubilité molaire moyenne définie correspondante des constituants du mélange de l'ensemble des monomères a en liaison polymère.

**2.** Utilisation de polymères I selon la revendication 1, qui contiennent en liaison polymère l'acide 2-acrylamido-2-méthylpropanesulfonique et/ou ses sels, en tant que monomère a.

**3.** Utilisation de polymères I selon l'une des revendications 1 et 2, dont le monomère b contenu en liaison polymère est choisi de sorte que la température de transition vitreuse $T_g^b$ d'un polymère construit uniquement à partir des monomères b s'élèverait à 60°C ou plus selon Fox.

**4.** Procédé de séchage par pulvérisation d'une dispersion aqueuse d'au moins un polymère II, caractérisé en ce que l'on ajoute au moins un polymère I en tant qu'adjuvant.

**5.** Poudre de polymères obtenue par un procédé selon la revendication 4.

**6.** Procédé selon la revendication 4, caractérisé en ce que la température d'entrée de l'air sec s'élève à 100-200°C et la température de sortie de l'air sec à 30-90°C.

**7.** Enduit en résine synthétique contenant au moins une poudre de polymères selon la revendication 5.

**8.** Liant minéral contenant au moins une poudre de polymères selon la revendication 5.

**9.** Préparation sèche d'enduit en résine synthétique contenant au moins une poudre de polymères selon la revendication 5.

**10.** Utilisation de poudres de polymères selon la revendication 5 dans des préparations pour revêtement ou collage.